(19) Europäisches Patentamt
European Patent Office
Office européen des brevets

(11) Veröffentlichungsnummer: **0 058 293**
**A1**

# (12) EUROPÄISCHE PATENTANMELDUNG

(21) Anmeldenummer: 82100158.3

(22) Anmeldetag: 12.01.82

(51) Int. Cl.³: **C 08 K 5/53**

(30) Priorität: 12.02.81 DE 3105114

(43) Veröffentlichungstag der Anmeldung: 25.08.82 Patentblatt 82/34

(84) Benannte Vertragsstaaten: AT BE CH DE FR GB IT LI NL SE

(71) Anmelder: CHEMIE LINZ AKTIENGESELLSCHAFT
St. Peter-Strasse 25
A-4020 Linz(AT)

(84) Benannte Vertragsstaaten: BE CH FR GB IT LI NL SE AT

(71) Anmelder: Lentia Gesellschaft mit beschränkter Haftung
Schwanthalerstrasse 39 Postfach 20 16 26
D-8000 München 2(DE)

(84) Benannte Vertragsstaaten: DE

(72) Erfinder: Saischek, Gerald, Dipl.-Ing.
Roseggerstrasse 4
A-4600 Wels(AT)

(72) Erfinder: Thonhofer, Kurt, Dr.
Boschweg 1b
A-4020 Linz(AT)

(72) Erfinder: Farnleitner, Lorenz, Dipl.-Ing. Dr.
Erlaaerstrasse 156
A-1232 Wien(AT)

(72) Erfinder: Fuchs, Franz
Schumpeterstrasse 2
A-4045 Linz(AT)

(72) Erfinder: Stern, Gerhard, Dipl.-Ing. Dr.
Lustenauerstrasse 17
A-4020 Linz(AT)

(54) **Verwendung von Alkandiphosphonsäuresalzen als flammhemmender Zusatz zu Kunststoffen.**

(57) Verwendung von Alkandiphosphonsäuresalzen der Formel I

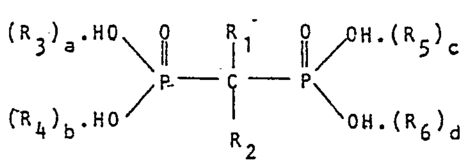

, I

worin $R_1$ eine geradkettige oder verzweigte Alkylgruppe mit 1 bis 8 C-Atomen sowie $R_2$ die Gruppe OH oder $NH_2$ bedeuten und $R_3$, $R_4$, $R_5$ und $R_6$ eine Stickstoffbase, wie Guanidin, Aminoguanidin, Dicyandiamid, Melamin und Harnstoff bedeuten, wobei a für die Zahl 1 und b, c und d für die Zahlen 0 oder 1 stehen, als flammhemmender Zusatz zu Kunststoffen.

EP 0 058 293 A1

# Verwendung von Alkandiphosphonsäuresalzen als flammhemmender Zusatz zu Kunststoffen

Die Erfindung betrifft die Verwendung von Alkandiphosphonsäuresalzen als flammhemmender Zusatz zu Kunststoffen.

Die meisten Kunststoffe sind, wenn sie einer offenen Flamme ausgesetzt sind, brennbar. In vielen Fällen ist daher der allgemeine Wunsch vorhanden, solche Kunststoffe so auszurüsten, daß sie schwer entflammbar oder gar unbrennbar sind. Es ist seit langem bekannt, daß durch Zusatz von halogenhaltigen organischen Phosphorverbindungen Kunststoffe mit flammwidrigen Eigenschaften erhalten werden können. Einer der Nachteile halogenhältiger flammhemmender Zusätze sind die bei der Verbrennung oder Zersetzung auftretenden, halogenhältigen, meist toxischen Zersetzungsprodukte.

Es ist weiters aus der japanischen Auslegeschrift Sho-46-30995 bekannt, cellulosehältige Materialien, wie Faser oder Papier mit einer wäßrigen Lösung, enthaltend eine Mischung, bestehend aus einer Alkandiphosphonsäure oder ihres Ammoniumsalzes und einer N-hältigen Verbindung, zu imprägnieren und unter Hitzeeinwirkung auf die Cellulosefaser oder das Cellulosepapier aufzukondensieren. Hierbei entsteht eine mehr oder minder dicke Überzugsschicht (Appretur) eines über Formaldehyd und N-Methylolverbindungen vernetzten Polymeren.

Überraschenderweise konnte nun gefunden werden, daß die Salze von Alkandiphosphonsäuren mit bestimmten stickstoffhaltigen Basen selbst flammhemmende Eigenschaften besitzen, wenn sie direkt in Kunststoffe eingearbeitet werden.

Gegenstand der vorliegenden Erfindung ist demnach die Verwendung von Alkandiphosphonsäuresalzen der allgemeinen Formel I

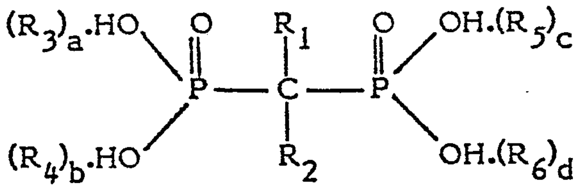

, I

worin $R_1$ eine geradkettige oder verzweigte Alkylgruppe mit 1 bis 8 C-Atomen sowie $R_2$ die Gruppe OH oder $NH_2$ bedeuten und $R_3$, $R_4$, $R_5$ und $R_6$ eine Stickstoffbase, wie Guanidin, Aminoguanidin, Dicyandiamid, Melamin oder Harnstoff bedeuten, wobei a für die Zahl 1 und b, c und d für die Zahlen 0 oder 1 stehen, als flammhemmender Zusatz zu Kunststoffen.

Die den Salzen der Formel I zugrundeliegenden 1-Hydroxyalkan-1,1-diphosphonsäuren können auf bekannte Art aus Alkancarbonsäure und $PCl_3$ oder Alkancarbonsäurechlorid und phosphorige Säure (Blaser et al., Z.anorg.allg. Chem. <u>381</u>, 247 bis 257 (1971)), die 1-Aminoalkan-1,1-diphosphonsäuren können aus Carbonsäurenitril und $PCl_3$ oder aus Carbonsäureamid. HCl und phosphoriger Säure (DE-OS 21 15 737) dargestellt werden. Die Herstellung der Salze der Formel I erfolgt üblicherweise, indem die Stickstoffbase, etwa Melamin, Harnstoff, Dicyandiamid, Aminoguanidin oder ein Salz der Stickstoffbase, etwa Guanidincarbonat, in einem Lösungsmittel, vorzugsweise in Wasser gelöst oder suspendiert und mit der Alkandiphosphonsäure oder einer wäßrigen Lösung oder Suspension derselben erwärmt wird, wobei ein Niederschlag oder eine Schmelze des gebildeten Salzes entsteht, worauf ev. nach geringfügigem Einengen der Niederschlag abfiltriert und getrocknet wird.

Der Alkanrest in den Verbindungen der Formel I kann geradkettig oder verzweigt sein und 1 bis 8 Kohlenstoffatome umfassen. Besonders bevorzugte Phosphonsäuren sind die 1-Hydroxyäthan-1,1-diphosphonsäure und die 1-Aminoäthan-1,1-diphosphonsäure. Als Basenanteil werden insbesondere Guanidin, Melamin oder Harnstoff verwendet, wobei Guanidin und Melamin besonders bevorzugt sind. Das Molverhältnis zwischen freier Säure und Base kann

zwischen 1 : 1 und 1 : 4 variieren, wobei das Verhältnis 1 : 2 bis 1 : 3 besonders bevorzugt ist.

Die Kunststoffe werden erfindungsgemäß flammhemmend gemacht, indem man die entsprechenden Salze dem jeweiligen Polymerisat als Pulver oder ev. als Paste zumischt und diese Mischungen beispielsweise auf einer Spritzgießmaschine direkt zu fertigen Formteilen verspritzt. Im allgemeinen wird es aber zweckmäßiger sein, zur Erzielung einer möglichst feinen Verteilung die Mischung aus Kunststoff-Pulver bzw. Granulat und dem Salz in einem separaten Schritt in einem passenden Extruder aufzuschmelzen und zu homogenisieren. Handelt es sich um die Herstellung eines Polyurethans, so wird man üblicherweise das Salz zuerst mit dem Polyol vermischen. Mit den erfindungsgemäßen flammhemmenden Zusätzen der Formel I können auch andere Zusätze mitverarbeitet werden, z.B. Glasfasern, Vliese oder Gewebe, anorganische Füllstoffe, wie Talk, ferner UV- und Wärmestabilisatoren, Verbindungen, die die elektrische Leitfähigkeit hinaufsetzen, Antistatika oder Farbstoffe.

Die Zusatzmenge an Verbindungen der allgemeinen Formel I hängt vom Ausmaß der für den jeweiligen Verwendungszweck des fertigen Kunststoffes geforderten flammhemmenden Wirkung ab. Sie liegt im Bereich von 2,5 bis 35 Gew.%, bezogen auf das Gewicht des flammfest ausgerüsteten Kunststoffes, wobei der Bereich von 5 bis 20 Gew.% besonders bevorzugt ist.

Die erfindungsgemäßen Mittel können in einer Vielzahl von Kunststoffen, beispielsweise Polyestern, Epoxyharzen, Polyolefinen oder Polyurethanen verwendet werden. Insbesonders eignen sie sich zur Herstellung von flammgehemmten Polyestern oder Epoxidharzen, wo sie beispielsweise auch mit Glasfasern oder -geweben zusammen verarbeitet werden können und GFK-Laminate bilden. Es zeigt sich, daß mit nur 15 Gew.% der Verbindung gemäß Beispiel 3 bereits ein LOI-Wert (limiting oxygen index) von 27,5 bei Polyesterharzen bzw. von 28,5 bei Epoxidharzen erreicht wird.

Die Verbindungen der allgemeinen Formel können auch gut in Polyolefine eingearbeitet werden, in Polypropylen wird z.B. mit 20 Gew.Teilen der Verbindung gemäß Beispiel 2 ein LOI-Wert von 29 erreicht.

Weiters eignen sich die Verbindungen der allgemeinen Formel zur Herstellung von Polyurethanschäumen, insbesondere zur Herstellung von Hartschäumen. Durch einen Zusatz von 20 Gew.%, bezogen auf Polyol, der Verbindung gemäß Beispiel 2 wird ein LOI-Wert von 24,5 erreicht.

Die flammhemmende Wirkung der Alkandiphosphonsäuresalze der Formel I wurde nach der Oxygen-Index-Methode (ASTM-D-2863-70) bestimmt. Dazu wurden Normprüfkörper mit den Abmessungen 65 x 6 x 3 mm für gepreßte bzw. ausgehärtete Polymerisate und 80 x 12 x 12 mm für Schaumstoffe herausgeschnitten.

Beispiel 1:

Zu 374 Gew.Teilen einer 60%igen wäßrigen Lösung von 1-Hydroxyäthan-1,1-diphosphonsäure werden 90 Gew.Teile Guanidin langsam zugegeben, die Lösung wird 2 Stunden bei 80°C gerührt und das Wasser im Vakuum abdestilliert, der Rückstand bei 110°C getrocknet. Es entstehen 260 Gew.Teile des Guanidinsalzes der 1-Hydroxyäthan-1,1-diphosphonsäure.

| | C | H | N | P |
|---|---|---|---|---|
| Berechnet | 13,6 | 4,9 | 15,8 | 23,4 |
| gefunden | 13,5 | 5,0 | 15,2 | 22,9 |

Fp = ab 185°C (Zersetzung)

Beispiel 2:

In einer Rührapparatur werden 36 Gew.Teile Guanidincarbonat in 100 Gew.Teilen $H_2O$ vorgelegt. In diese Lösung werden bei ca. 30°C 68,7 Gew.Teile einer 60%igen wäßrigen Lösung von 1-Hydroxyäthan-1,1-diphosphonsäure langsam eingebracht. Anschließend wird 2 Stunden bei Raumtemperatur nachgerührt und das Produkt abfiltriert. Man erhält 58 Gew.Teile Diguanidinsalz der 1-Hydroxyäthan-1,1-diphosponsäure.

| | C | H | N | P |
|---|---|---|---|---|
| Berechnet | 14,8 | 5,5 | 25,9 | 19,1 |
| gefunden | 14,7 | 5,5 | 26,4 | 19,3 |

Fp = 225°C (Zersetzung)

Beispiel 3:

In einer Rührapparatur werden 54 Gew.Teile Guanidincarbonat in 43 Teilen $H_2O$ unter teilweiser Lösung aufgeschlämmt und auf 60°C erwärmt. In diese Lösung werden 68,7 Gew.Teile einer 60%igen wäßrigen Lösung von 1-Hydroxyäthan-1,1-diphosphonsäure unter $CO_2$-Entwicklung eingerührt. Die erhaltene

klare Lösung wird nun heiß in 40 Gew.Teile Methanol eingerührt. Nach Abkühlen auf Raumtemperatur werden 69 Gew.Teile Triguanidinsalz der 1-Hydroxyäthan-1,1-diphosphonsäure erhalten.

| | C | H | N | P |
|---|---|---|---|---|
| Berechnet | 15,7 | 6,0 | 32,9 | 16,2 |
| gefunden | 15,5 | 6,0 | 32,6 | 16,9 |

Fp = 227°C (Zersetzung)

Beispiel 4:

Zu 374 Gew.Teilen einer 60%igen wäßrigen Lösung von 1-Hydroxyäthan-1,1-diphosphonsäure werden 259 Gew.Teile freies Guanidin, gelöst in 300 Teilen Wasser langsam zugegeben, die Lösung wird 1 Stunde nachgerührt und langsam mit 2 500 Gew.Teilen Methanol versetzt, worauf ein Niederschlag entsteht, der abfiltriert und getrocknet wird. Es entstehen 410 Gew.Teile des Tetraguanidinsalzes der 1-Hydroxyäthan-1,1-diphosphonsäure.

| | C | H | N | P |
|---|---|---|---|---|
| Berechnet | 16,3 | 6,3 | 38,0 | 14,0 |
| gefunden | 15,9 | 6,4 | 38,1 | 13,9 |

Fp = ab 220°C (Zersetzung)

Beispiel 5:

In einer Rührapparatur mit Rückflußkühlung werden 100,8 Gew.Teile Melamin in 4 500 Gew.Teilen Wasser heiß gelöst. In diese Lösung werden 82,4 Gew.Teile 1-Hydroxyäthan-1,1-diphosphonsäure langsam zugegeben. Nach erfolgter Zugabe wird noch 10 Minuten die Suspension auf Rückflußtemperatur gehalten, das Produkt wird heiß filtriert. Man erhält 180,8 Gew.Teile Dimelaminsalz der 1-Hydroxyäthan-1,1-diphosphonsäure.

| | C | H | N | P |
|---|---|---|---|---|
| Berechnet | 21,0 | 4,4 | 36,7 | 13,5 |
| gefunden | 19,8 | 4,7 | 34,6 | 12,9 |

Fp = 230°C (Zersetzung)

Beispiel 6:

128,7 Gew.Teile 1-Hydroxyäthan-1,1-diphosphonsäure und 150 Gew.Teile Harnstoff werden in 100 ml $H_2O$ langsam in einer Rührapparatur auf 110°C erwärmt und ca. 1,5 Stunden auf 110°C gehalten. Die erhaltene Schmelze wird unter Vakuum zur Trockene eingeengt. Man erhält 275 Gew.Teile Tetraharnstoffsalz der 1-Hydroxyäthan-1,1-diphosphonsäure.

| | C | H | N | P |
|---|---|---|---|---|
| Berechnet | 16,1 | 5,4 | 25,1 | 13,9 |
| gefunden | 15,2 | 5,1 | 24,9 | 14,2 |

Fp = 115 - 116°C

Beispiel 7:

In 500 Gew.Teilen Wasser werden 18 Gew.Teile Guanidincarbonat gelöst. Die klare Lösung wird auf ca. 80°C erwärmt und unter starker $CO_2$-Entwicklung werden 19,1 Gew.Teile 1-Aminoäthan-1,1-diphosphonsäure eingerührt. Die erhaltene Suspension wird 1 Stunde auf 80°C gehalten, der entstandene Niederschlag kalt filtriert. Man erhält 29 Gew.Teile Diguanidinsalz der 1-Aminoäthan-1,1-diphosphonsäure.

| | C | H | N | P |
|---|---|---|---|---|
| Berechnet | 14,9 | 5,9 | 30,3 | 19,2 |
| gefunden | 14,2 | 6,3 | 31,2 | 18,6 |

Fp = ab 205°C (Zersetzung)

Beispiel 8:

In 500 Gew.Teilen Wasser werden 18 Gew.Teile Guanidincarbonat gelöst. Die klare Lösung wird auf ca. 80°C erwärmt und unter starker $CO_2$-Entwicklung werden langsam 29 Gew.Teile 1-Hydroxyoctan-1,1-diphosphonsäure eingerührt. Der entstandene flockige Niederschlag wird kalt abfiltriert. Man erhält 39,9 Gew.Teile Diguanidinsalz der 1-Hydroxyoctan-1,1-diphosphonsäure.

| | C | H | N | P |
|---|---|---|---|---|
| Berechnet | 29,4 | 7,4 | 20,6 | 15,2 |
| gefunden | 29,5 | 7,1 | 20,4 | 14,0 |

Fp = ca. 205°C (Erweichung), 275 - 280°C (Zersetzung)

Beispiel 9:

Zu 123,7 Gew.Teilen eines handelsüblichen, ungesättigten Polyestervorpolymerisates werden 3,8 Gew.Teile Benzoylperoxidpaste (50%ig) und 22,5 Gew.Teile der Verbindung gemäß Beispiel 1 in einem Becherglas zugegeben. Diese Mischung wird mit einem Korbrührer etwa 4 Minuten mit 800 Umdrehungen pro Minute gut durchmischt. Das Gemisch wird in Formen ausgegossen. Nach dem Aushärten wird mit den erhaltenen Probekörpern der ASTM-Test-D-2863-70 durchgeführt. Der erzielte LOI-Wert beträgt 25,0.

Analog wurden weitere Polyesterharze unter Verwendung verschiedener Verbindungen der vorliegenden Erfindung hergestellt. Die erzielten Limiting-Oxigen-Index (LOI)-Werte nach ASTM-D-2863-70 sind in Tabelle 1 dargestellt.

Beispiel 10:

76,5 Gew.Teile Epoxydharz auf Basis Bisphenol A, 51 Gew.Teile Polyaminoimidazolin und 22,5 Gew.Teile der Verbindung gemäß Beispiel 2 werden in einem Becherglas durch Rühren mit einem Korbrührer (etwa 120 sec. mit 1000 Umdrehungen pro Minute) gut durchmischt. Das Gemisch wird in eine entsprechende Form gegossen und ausgehärtet. Nach dem Aushärten wird mit den

Stäbchen der ASTM-Test-D-2863-70 durchgeführt. Der erzielte LOI-Wert beträgt 27,5.

Analog wurden weitere Epoxydharze unter Verwendung anderer Verbindungen der vorliegenden Erfindung hergestellt. Die Ergebnisse sind in Tabelle 2 gegenübergestellt.

Beispiel 11:

80 Gew.Teile Polypropylen (Dichte 0,9, MFI 0,3 bis 0,6) und 20 Gew.Teile der Verbindung gemäß Beispiel 2 werden in einem Zweiwellen-Extruder bei 190°C homogenisiert. Aus dem erhaltenen Compound werden in einer beheizbaren Laborpresse bei 190°C dünne Platten gepreßt und die entsprechenden Prüfkörper herausgeschnitten. Mit den Probekörpern wird nach ASTM-D-2863-70 der LOI-Wert bestimmt. Der erzielte LOI-Wert beträgt 27,5.

Beispiel 12:

80 Gew.Teile Polyäthylen (Dichte 0,917 bis 0,919, MFI 1,3 bis 1,8) und 20 Gew.Teile der Verbindung gemäß Beispiel 2 werden in einer beheizbaren Knetkammer bei 160°C homogenisiert. Die erhaltene Masse wird in einer beheizbaren Laborpresse bei 160°C zu dünnen Platten gepreßt. Daraus werden entsprechende Probekörper herausgeschnitten und der LOI-Wert nach ASTM-D-2863-70 bestimmt. Der erzielte LOI-Wert beträgt 25,5.

Analog den Beispielen 11 und 12 wurden weitere Mischungen unter Verwendung verschiedener Verbindungen der vorliegenden Erfindung hergestellt. Die erhaltenen Ergebnisse sind in Tabelle 3 und 4 gegenübergestellt.

Beispiel 13:

Ein Gemisch, das 100 Gew.Teile eines Polyols mit einer Hydroxylzahl von etwa 500, 20 Gew.Teile Trichlorfluormethan, 0,5 Gew.Teile N,N-Dimethylcyclohexylamin, 20 Gew.Teile der Verbindung gemäß Beispiel 1 enthält, wird in ein Becherglas eingewogen. Diese Mischung wird mit einem Propellerrührer ca. 60

0058293

sec. mit 1000 Umdrehungen pro Minute gut durchmischt. In dieses Gemisch werden nun 146 Gew.Teile 4,4'-Diisocyanatdiphenylmethan eingetragen und das Mischen noch etwa 10 sec. fortgesetzt. Das Gemisch wird nun in eine Papierform ausgegossen. Der erhaltene Schaum besitzt eine Dichte von 54,0 g/l. Analog wurden weitere Schäume mit anderen Verbindungen der vorliegenden Erfindung eingesetzt. Die erhaltenen Dichten bzw. die erzielten LOI-Werte sind in Tabelle 5 gegenübergestellt.

Tabelle 1 (Polyesterharze)

| Verbindung Beispiel Nr. | Gew.% d.Verbg. | LOI |
|---|---|---|
| Kontrolle | - | 19,5 |
| 2 | 15 | 25,0 |
| | 20 | 26,5 |
| | 25 | 34,0 |
| 3 | 15 | 27,5 |
| | 20 | 34,0 |
| | 25 | >40,0 |
| 6 | 22 | 40 |
| 7 | 20 | 28 |
| 8 | 20 | 23 |

Tabelle 2 (Epoxydharze)

| Verbindung Beispiel Nr. | Gew.% d.Verbg. | LOI |
|---|---|---|
| Kontrolle | - | 20,0 |
| 2 | 15 | 27,5 |
| | 20 | 29,5 |
| | 25 | 32,0 |
| 3 | 15 | 28,5 |

| | | |
|---|---|---|
| | 20 | 30,0 |
| | 25 | 31,0 |
| 6 | 25 | 29 |
| 8 | 20 | 25 |

Tabelle 3 (Polypropylen)

| Verbindung Beispiel Nr. | Gew.Teile d.Verbg. | Gew.Teile PP | LOI |
|---|---|---|---|
| Kontrolle | - | 100 | 18,0 |
| 2 | 20 | 80 | 29,0 |
| 3 | 20 | 80 | 27,5 |
| 5 | 20 | 80 | 23,5 |

Tabelle 4 (Polyäthylen)

| Verbindung Beispiel Nr. | Gew.Teile d.Verbg. | Gew.Teile LDPE | LOI |
|---|---|---|---|
| Kontrolle | - | 100 | 18,0 |
| 2 | 10 | 90 | 20,0 |
| 2 | 20 | 80 | 25,5 |
| 3 | 10 | 90 | 20,5 |
| 3 | 20 | 80 | 24,0 |

Tabelle 5 (Polyurethanschäume)

| Verbindung Beispiel Nr. | Gew.Teile d. Vbg.bez.auf 100 T.Polyol | Schaum-dichte g/l | LOI |
|---|---|---|---|
| Kontrolle | - | 41 | 21,0 |
| 1 | 10 | 47 | 22,5 |
| | 20 | 54 | 24,0 |
| 2 | 10 | 53 | 22,5 |
| | 20 | 55 | 24,5 |
| 3 | 10 | 40 | 23,0 |
| | 20 | 41 | 24,0 |
| 4 | 10 | 62 | 23,0 |
| | 20 | 60 | 24,0 |

Patentansprüche:

1. Verwendung von Alkandiphosphonsäuresalzen der allgemeinen Formel

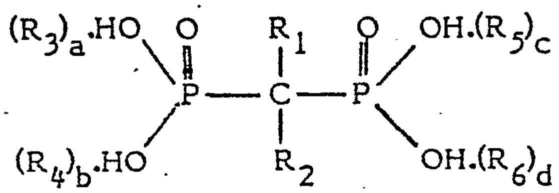

, I

worin $R_1$ eine geradkettige oder verzweigte Alkylgruppe mit 1 bis 8 C-Atomen sowie $R_2$ die Gruppen OH oder $NH_2$ bedeuten und $R_3$, $R_4$, $R_5$ und $R_6$ eine Stickstoffbase, wie Guanidin, Aminoguanidin, Dicyandiamid, Melamin oder Harnstoff bedeuten, wobei a für die Zahl 1 und b, c und d für die Zahlen 0 oder 1 stehen, als flammhemmender Zusatz zu Kunststoffen.

2. Verwendung gemäß Anspruch 1, dadurch gekennzeichnet, daß die Verbindungen der allgemeinen Formel I in einer Menge von 5 bis 20 Gew.%, bezogen auf die fertige Mischung, zugesetzt werden.

3. Verwendung gemäß den Ansprüchen 1 und 2, dadurch gekennzeichnet, daß die Verbindungen der Formel I Guanidin- oder Melaminsalze der 1-Hydroxyalkan-1,1-diphosphonsäuren sind.

4. Verwendung gemäß Anspruch 3, dadurch gekennzeichnet, daß die Verbindungen der Formel I Guanidinsalze der 1-Hydroxyäthan-1,1-diphosphonsäure sind.

5. Verwendung gemäß den Ansprüchen 1 bis 4, dadurch gekennzeichnet, daß die Kunststoffe Polyester, Epoxyharze, Polyolefine oder Polyurethane sind.

6. Verwendung gemäß Anspruch 5, dadurch gekennzeichnet, daß der Kunststoff Polyester ist.

7. Verwendung gemäß Anspruch 5, dadurch gekennzeichnet, daß der Kunststoff ein Epoxyharz ist.

O.Z.699
5.2.1981

0058293

Europäisches Patentamt

# EUROPÄISCHER RECHERCHENBERICHT

Nummer der Anmeldung
EP 82 10 0158

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| A | GB - A - 1 373 908 (NATIONAL RESEARCH)<br>* Anspruch 1 *<br>--------- | 1,7 | C 08 K 5/53 |

RECHERCHIERTE SACHGEBIETE (Int. Cl.³)

C 07 F
C 08 K
C 08 L

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| DEN HAAG | 19. Mai 1982 | HOFFMANN |